# EUROPÄISCHE PATENTSCHRIFT

(11) **EP 0 413 708 B1**
(45) Veröffentlichungstag und Bekanntmachung des Hinweises auf die Patenterteilung: **15.09.1993**
(21) Anmeldenummer: 89904733.6
(22) Anmeldetag: 24.04.1989
(51) Int. Cl.: H02K 9/22, H02K 1/18

(54) **ELEKTRISCHE MASCHINE, INSBESONDERE ROHRGENERATOR**
ELECTRIC MACHINE, IN PARTICULAR TUBULAR GENERATOR
MACHINE ELECTRIQUE, EN PARTICULIER GENERATRICE BULBE

(30) Priorität: 06.05.1988 AT 1192/88
(43) Veröffentlichungstag der Anmeldung: 27.02.1991
(73) Patentinhaber: ELIN-UNION Aktiengesellschaft für elektrische Industrie, A-1141 Wien (AT)
(72) Erfinder: MÜLLER, Franz, A-8071 Grambach (AT); ALBERT, Günter, A-8160 Weiz (AT)
(74) Vertreter: Krause, Peter
(86) Internationale Anmeldenummer: AT8900039
(87) Internationale Veröffentlichungsnummer: WO8911176

(56) Entgegenhaltungen:
- CH-A- 481 519
- DE-A- 1 488 575
- US-A- 2 632 861
- US-A- 3 539 853
- Patent Abstracts of Japan, Band 6, nr. 140 (E121)(1081) 29 July 1982, & JP-A-5765253.
- Patent Abstracts of Japan, Band 10, Nr. 213 (E-422)(2269), 25 July 1986,& JP-A-6152136.
- Patent Abstracts of Japan, Band 2, Nr. 62 11 Mai 1978 Seite 1958 E 78, & JP-A-5328204.
- Patent Abstracts of Japan, Band 9, Nr.147 (E-323)(1870), 21 Juni 1985, & JP-A-6028755.

## Beschreibung

Die Erfindung betrifft einen Rohrgenerator, dessen Ständerblechpaket unmittelbar an dem vom Triebwasser umspülten Gehäusering befestigt ist.

Aus der DE-OS 14 88 575 ist eine elektrische Maschine bekannt, bei der der Gehäusemantel auf ein in sich kompaktes Ständerblechpaket (Rondenpaket) aufgeschrumpft oder aufgepreßt wird. Zwischen Gehäusemantel und Ständerblechpaket ist eine Zwischenschicht mit gutem Wärmeleitvermögen vorgesehen.

Im Gegensatz dazu, wird bei Großmaschinen, wie z.B. Rohrgeneratoren, - und dies ist die Problematik vorliegender Anmeldung - bedingt durch die am Markt erhältlichen Elektroblechbreiten von max. ca. 1,5m, die Segmentbauweise angewandt. Das Blechpaket ist dabei aus einzelnen Blechsegmenten zusammengesetzt und auf im Gehäusemantel befestigten Leisten (z.B. Schwalbenschwanzleisten) geschichtet.

Die in DE-OS 1 488 575 beschriebene Zwischenschicht, dient dort als reines Füllmaterial für Unebenheiten. Die Befestigung des Blechpaketes ist durch Schrumpfen oder Einpressen gegeben. Ein veränderlicher Spalt existiert nicht. Dagegen muß bei Großmaschinen, bedingt durch die Abmessung, das Blechpaket in das Gehäuse geschichtet werden, wobei die mechanische Verbindung über seitliche Druckplatten bzw. über Schwalbenschwanzleisten erfolgt.

Bei Rohrgeneratoren kleiner und mittlerer Leistung wird aus konstruktiven Gründen das Ständerblechpaket unmittelbar an dem vom Triebwasser umspülten Gehäusering befestigt. Distanzierungen in Form von Rippen und dgl. werden, um eine möglichst kompakte Bauweise zu erreichen, vermieden.

Bezweckt wird mit dieser Bauweise, einen möglichst hohen Anteil von der im gesamten Ständerpaket einschließlich der Ständerwicklung entstehenden Verlustenergie unmittelbar über den Gehäusering an das Triebwasser abzuführen. Damit kann das zur Abfuhr der übrigen Maschinenverluste - elektrische und mechanische Verluste des Rotors, restliche Ständerverluste - benötigte Kühlsystem in der Leistungsfähigkeit wesentlich beschränkt werden.

Eine Reduktion der Luftmenge bewirkt auch geringere Luftreibungsverluste und kleinere Lüfterleistungen. Daraus resultiert der neben der Verbilligung des Kühlsystems auch gleichzeitig eine Wirkungsgradverbesserung der Anlage.

Untersuchungen bei bisher ausgeführten Anlagen ergaben, daß aufgrund der unterschiedlichen Erwärmungen vom Blechpaket und Gehäusering und den daraus sich ergebenden unterschiedlichen Wärmedehnungen der Bauteile, nicht für jeden Betriebszustand des Generators eine gute thermische Kontaktierung des Blechpaketes mit dem Gehäusering sichergestellt werden kann.

Vor allem die unvermeidliche Verschichtung des aus einzelnen Blechsegmenten aufgebauten Ständerpaketes verhindert eine vollflächige Kontaktierung mit dem Gehäusering. Eine mechanische Bearbeitung der Außenkontur des Blechpaketes scheidet jedoch aus elektrischen Verlustgründen und wegen hohem Fertigungsaufwand aus. Außerdem ist die Verbindung zwischen dem Blechpaket und dem Gehausering konstruktiv so auszulegen, daß eine Wärmedehnung des Blechpaketes ermöglicht wird, da sonst mechanische Spannungszustände, wie bekannt ist, zu beachtlichen Steigerungen der Eisenverluste führen können.

Ferner ist auch der US-A-2632 861 ein Verfahren für den Zusammenbau von Ständerblechpaket und Gehäusemantel bekannt. Dieses Verfahren ist ein Ersatz für das Aufpressen bzw. Aufschrumpfen. Die genannten Schichten dienen einerseits dem leichteren Zusammenbau von Blechpaket und Gehäusemantel mit gleichzeitigen Fixiereinrichtungen, damit es zwischen Blechpaket und Gehäusemantel nicht zu Verschiebungen kommt, und anderseits dem Ausgleich von radialen Drücken.

Aus der JP-A 5 328 204 ist es bekannt, daß die Metallfolie im Spalt zwischen Statorpaket und Statorgehäuse in gewellter Form eingebracht wird, wobei die Hohlräume mit einem Epoxy- bzw. Polyesterharz gefüllt werden. Im ausgehärteten Zustand kann diese Anordnung die gestellten Anforderungen nicht erfüllen.

In der US-A 3 539 853 wird eine Konstruktion beschrieben, die sich ausschließlich mit der Verbesserung des Wärmeüberganges befaßt. Die auftretenden radialen Druckbeanspruchungen, die gerade bei Verwendung vom erstarrenden Füllmaterialien, wie Harzen, Epoxiden etc., auftreten, bleiben unberücksichtigt.

Aufgabe der Erfindung ist es, die Wärmeabfuhr vom Ständerblechpaket über den Gehäusering an das Triebwasser zu erhöhen.

Der eingangs zitierte Rohrgenerator ist erfindungsgemäß dadurch gekennzeichnet, daß in den konstruktiv und fertigungstechnisch bedingten Spalt zwischen dem Ständerblechpaket und dem Gehäusering abschnittsweise ein elastisch, verformbarer Werkstoff mit einer Wärmeleitfähigkeit größer als 0,2W/m K, vorzugsweise mit etwa 1W/m K vorgesehen ist, wobei dieser Werkstoff, beispielsweise durch satte Kontaktierung, Verklebung, od. dgl., einen guten Wärmeübergang einerseits zum Gehäusering und anderseits zum Ständerblechpaket aufweist.

Mit der Erfindung ist es erstmals möglich eine optimale thermische Kopplung zwischen dem Ständerblechpaket und dem Gehäusering zu erreichen. Es ist vor allem bei den betrieblich bedingten Spaltänderungen eine elastische Verformung des Werkstoffes gegeben, ohne daß dabei unzulässige mechanische Spannungen auf das Ständerblechpaket ausgeübt werden. Untersuchungen haben gezeigt, daß eine kontinuierliche Spaltfüllung nicht zwingend ist. Es hat sich dies als Vorteil gezeigt, weil eine tangentiale Ausdehnung des Werkstoffes bei einer temperaturbedingter Verminderung des Spaltes möglich ist.

Nach einer weiteren Ausgestaltung der Erfindung ist der Werkstoff eine Metallfolie, insbesondere Kupferfolie, in gewellter Form. Eine derartige Folie ist in wirtschaftlicher Hinsicht zu empfehlen, da sie auch einfach verarbeitet werden kann.

Gemäß einer weiteren besonderen Ausgestaltung der Erfindung ist der Werkstoff ein Elastomere, oder ein Thermoplast oder ein thermoplastisch eingestelltes Reaktionsharz od. dgl. Derartige Werkstoffe können entweder vor dem Schichten der Blechpakete direkt auf den Gehäusemantel aufgebracht oder nachträglich in den Spalt injiziert werden. Durch die gute Verformbarkeit solcher Werkstoffe werden die Unregelmäßigkeiten der Schichtung im Ständerblechpaket ausgeglichen. Das Ständerblechpaket ist dadurch mit dem Gehäusering elastisch und mechanisch spannungsfrei thermisch gekoppelt.

Nach einem weiteren Merkmal der Erfindung beinhaltet der Werkstoff zur Verbesserung der Wärmeleitfähigkeit Zusatzstoffe. Durch die entsprechende Auswahl derartiger Zusatzstoffe kann die Wärmeabfuhr über den Gehäusering bedeutend erhöht werden.

Gemäß einem besonderem Merkmal der Erfindung ist der Zusatzstoff Kupferpulver oder Aluminiumpulver od. dgl. Vorteilhaft dabei ist, daß diese Zusatzstoffe problemlos zu den Werkstoffen zugemischt werden können.

Die Erfindung wird an einem in der Zeichnung dargestellten Ausführungsbeispiel näher erläutert.

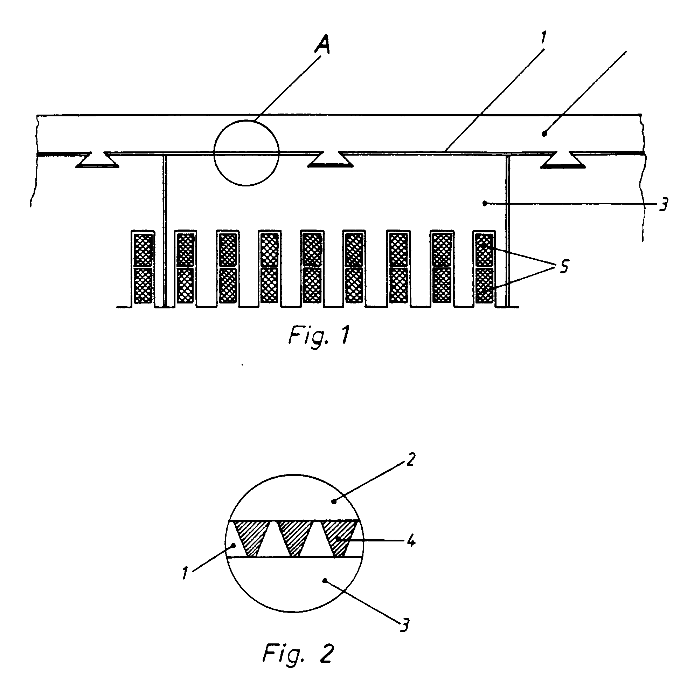

Die Fig. 1 zeigt einen Schnitt durch die Maschine und Fig. 2 den Ausschnitt A, vergrößert dargestellt.

Gemäß der Fig. 1 ist von der elektrischen Maschine, die vorzugsweise als Rohrgenerator ihren Einsatz findet, ein Gehäusering 2 und ein Ständerblechpaket 3 dargestellt. Im Ständerblechpaket 3 befinden sich die Statorwicklungen 5. Ferner ist das Ständerblechpaket 3 unmittelbar über beispielsweise Schwalbenschwanzverbindungen an dem Gehäusering 2 befestigt. Konstruktiv bedingt, ergibt sich zwischen dem Ständerblechpaket 3 und dem Gehäusering 2 ein Spalt 1.

Um nun die im Ständerblechpaket 3 einschließlich der Ständerwicklung 5 entstehende Verlustenergie über das den Gehäusering 2 umspülende Triebwasser optimal abführen zu können, wird in den Spalt 1 ein elastisch verformbarer Werkstoff 4 eingebracht.

Dieser Werkstoff 4 soll eine Wärmeleitfähigkeit die größer als 0,2 W/m K, am günstigsten erscheint 1 W/m K, aufweisen. Wie die Fig. 2 zeigt, genügt eine abschnittsweise Einbringung des Werkstoffes 4 in den Spalt 1 zwischen dem Gehäusering 2 und dem Ständerblechpaket 3.

Durch die vorhin aufgezeigten Maßnahmen zur Verbesserung der thermischen Kopplung zwischen Ständerblechpaket 3 und dem Gehäusering 2 kann eine Steigerung der Wärmeabfuhr um mindestens 20 % erreicht werden.

Darüberhinaus kann bei einer abschnittsweisen Einbringung des Elastomere, dieses, bei einer Verminderung des Spaltes 1 sich tangential ausdehnen. Diese thermische Kopplung erzeugt in keinem Fall mechanische Spannungszustände. Ein guter Wärmeübergang ist jedoch durch die Verklebung gegeben.

## Patentansprüche

1. Rohrgenerator, dessen Ständerblechpaket (3) unmittelbar an dem vom Triebwasser umspülten Gehäusering (2) befestigt ist, dadurch gekennzeichnet, daß in den konstruktiv und fertigungstechnisch bedingten Spalt (1) zwischen dem Ständerblechpaket (3) und dem Gehäusering (2) abschnittsweise ein elastisch, verformbarer Werkstoff (4) mit einer Wärmeleitfähigkeit größer als 0,2W/m K, vorzugsweise mit etwa 1W/m K vorgesehen ist, wobei dieser Werkstoff (4), beispielsweise durch satte Kontaktierung, Verklebung, o. dgl., einen guten Wärmeübergang einerseits zum Gehäusering (2) und anderseits zum Ständerblechpaket (3) aufweist.

2. Rohrgenerator, nach Anspruch 1, dadurch gekennzeichnet, daß der Werkstoff (4) eine Metallfolie, insbesondere Kupferfolie, in gewellter Form ist.

3. Rohrgenerator nach Anspruch 1, daduch gekennzeichnet, daß der Werkstoff (4) ein Elastomere ist oder ein thermoplastisch eingestelltes Reaktionsharz oder ein an sich bekanntes Thermoplast od. dgl. ist.

4. Rohrgenerator nach Anspruch 3, dadurch gekennzeichnet, daß der Werkstoff (4) zur Verbesserung der Wärmeleitfähigkeit Zusatzstoffe beinhaltet.

5. Rohrgenerator nach Anspruch 4, dadurch gekennzeichnet, daß der Zusatzstoff Kupferpulver oder wie an sich bekannt, Aluminiumpulver od. dgl. ist.

## Claims

1. Bulb generator, the laminated stator core (3) of which is fixed directly to the annular frame (2) rewound by the motive water, characterized in that an elastic, mouldable material (4) the thermal conductivity of which is greater than 0.2 W/m K, preferentially approximately 1 W/m K, is provided in the gap (1), required for constructional and production reasons, between the laminated stator core (3) and the annular frame (2), said material (4) exhibiting good heat transfer on the one hand with the annular frame (2) and on the other hand with the laminated stator core (3), for example by close contacting, bonding, or the like.

2. Bulb generator according to claim 1, characterised in that the material (4) is a metal foil, particularly copper foil, in a corrugated form.

3. Bulb generator according to claim 1, characterised in that the material (4) is an elastomer or a casing resin used as a thermoplastic, or a thermoplastic known in itself or the like.

4. Bulb generator according to claim 3, characterised in that the material (4) contains additives for improving the thermal conductivity.

5. Bulb generator according to claim 4, characterised in that the additive is powdered copper or, as is known in itself, powdered aluminium or the like.

## Revendications

1. Générateur tubulaire dont le paquet de tôles (3) du stator est fixé directement à la virole (2) de la carcasse qui est léchée par l'eau motrice, caractérisé en ce que, dans la fente (1) entre le paquet de tôles (3) du stator et la virole (2) de la carcasse, est prévue, de façon discontinue, une matière (4) élastiquement déformable possédant une conductibilité thermique supérieure à 0,2W/m K, de préférence, d'environ 1W/m K, cette matière (4) présentant une bonne transmission de la chaleur, d'une part, vers la virole (2) de la carcasse et, d'autre part, vers le paquet de tôles (3) du stator, par exemple par contact intégral, collage ou équivalents.

2. Générateur tubulaire selon la revendication 1, caractérisé en ce que la matière (4) est une feuille métallique, en particulier une feuille de cuivre, sous forme ondulée.

3. Générateur tubulaire selon la revendication 1, caractérisé en ce que la matière (4) est un élastomère ou une résine de réaction de constitution thermoplastique, ou un thermoplaste connu en soi ou équivalent.

4. Générateur tubulaire selon la revendication 3, caractérisé en ce que la matière (4) contient des additifs pour l'amélioration de la conductibilité thermique.

5. Générateur tubulaire selon la revendication 4, caractérisé en ce que l'additif est une poudre de cuivre ou, de la façon connue en soi, une poudre d'aluminium ou équivalent.
